# EUROPÄISCHE PATENTANMELDUNG

(11) **EP 1 331 158 A1**
(43) Veröffentlichungstag der Anmeldung: **30.07.2003**
(21) Anmeldenummer: 02100060.9
(22) Anmeldetag: 28.01.2002
(51) Int. Cl.: B62D 6/04

(54) **Verfahren zur Kompensation von Lenkmomentstörungen**

(71) Anmelder: Ford Global Technologies, Inc., A subsidiary of Ford Motor Company, Dearborn, Michigan 48126 (US)
(72) Erfinder: Mould, Mike, 51375, Leverkusen (DE); Redlich, Peter, 50733, Köln (DE)
(74) Vertreter: Drömer, Hans-Carsten, Dr.-Ing.

(57) **Zusammenfassung**

Die Erfindung betrifft ein Verfahren zur Kompensation von Lenkmomentstörungen, die durch eine ungleiche Drehmomentverteilung an den Vorderrädern (1, 4) eines Kraftfahrzeugs mit Frontantrieb oder Allradantrieb und aktivem Differential (3) erzeugt wird. Dabei wird aus der Drehmomentverteilung, dem Gesamtdrehmoment und dem Lenkhebel (2) die Größe der Lenkmomentstörung ermittelt und über eine aktive Lenkunterstützungseinrichtung (6) ein Kompensationsmoment auf das Lenksystem (5) ausgeübt.

## Beschreibung

Die Erfindung betrifft ein Verfahren zur Kompensation von Lenkmomentstörungen in einem Kraftfahrzeug mit Frontantrieb oder Allradantrieb und einem aktiven Differential an den Vorderrädern sowie mit einer aktiven Lenkunterstützungseinrichtung. Ferner betrifft die Erfindung ein zur Durchführung des Verfahrens ausgebildetes Kraftfahrzeug.

Wenn auf die beiden steuerbaren Vorderräder eines Kraftfahrzeugs unterschiedlich große Drehmomente einwirken, wirken diese über den Lenkhebel auf das Lenksystem zurück und erzeugen dort unerwünschte Lenkmomentstörungen. Bei einem Kraftfahrzeug mit Frontantrieb oder Allradantrieb und einem herkömmlichen Differential im Antriebsstrang sorgt das Differential im Wesentlichen für gleich große Antriebsmomente an beiden Vorderrädern, so daß die genannten Lenkmomentstörungen kein Problem darstellen. Bei Sperrdifferentialen kann jedoch gezielt eine ungleiche Verteilung des Antriebsmomentes auf die beiden Vorderräder erfolgen, um zum Beispiel dem Durchdrehen eines Rades auf glattem Untergrund zu begegnen. In diesem Falle kommt es zu den eingangs genannten Lenkmomentstörungen, die sich für den Fahrer unangenehm bemerkbar machen und die Steuerung des Kraftfahrzeugs erschweren.

In diesem Zusammenhang ist aus der DE 42 27 805 A1 eine Steuerung eines Sperrdifferentials bekannt, bei welcher während einer Kurvenfahrt je nach Lastverteilung zwischen den inneren und äußeren Rädern ein Begrenzungsmoment am Differential ausgeübt wird oder nicht. Weiterhin wird von einer Einrichtung zur aktiven Lenkunterstützung eine Hilfskraft ausgeübt. Die Steuerung erfolgt dabei in verhältnismäßig aufwendiger Weise unter Einsatz mehrerer Beschleunigungssensoren.

Vor diesem Hintergrund bestand eine Aufgabe der vorliegenden Erfindung darin, ein Verfahren bereitzustellen, welches in einfacher Weise dazu beiträgt, durch die Wirkung eines aktiven Differentials erzeugte Lenkmomentstörungen zu unterdrükken.

Diese Aufgabe wird durch ein Verfahren mit den Merkmalen des Anspruchs 1 sowie durch ein Kraftfahrzeug mit den Merkmalen des Anspruchs 4 gelöst.

Vorteilhafte Ausgestaltungen sind in den Unteransprüchen enthalten.

Das erfindungsgemäße Verfahren dient der Kompensation von Lenkmomentstörungen in einem Kraftfahrzeug mit Frontantrieb oder Allradantrieb und einem aktiven Differential im Antriebsstrang der Vorderräder sowie mit einer aktiven Lenkunterstützungseinrichtung. Das Verfahren umfaßt die folgenden Schritte:
- Ermittlung der von dem aktiven Differential vorgenommenen Drehmomentverteilung auf die Vorderräder;
- Ermittlung des Gesamtdrehmomentes, welches vom Motor an die angetriebenen Vorderräder abgegeben wird;
- Ermittlung eines Kompensationsmomentes aus der genannten Drehmomentverteilung und dem genannten Gesamtdrehmoment und Ausübung dieses Kompensationsmomentes durch die Lenkunterstützungseinrichtung, wobei das Kompensationsmoment Störkräfte auf das Lenksystem aufgrund einer ungleichen Drehmomentverteilung ganz oder teilweise kompensiert.

Mit dem erfindungsgemäßen Verfahren ist es in einfacher Weise möglich, Lenkmomentstörungen zu unterdrücken, die durch die Wirkung eines aktiven Differentials zum Beispiel bei einer Kurvenfahrt oder bei Untergründen mit unter den beiden Vorderrädern verschiedenen Reibungswerten auftreten können. Das Verfahren kommt dabei im einfachsten Falle allein mit den Einrichtungen aus, die ohnehin bereits in einem Kraftfahrzeug mit aktivem Differential und Lenkunterstützungseinrichtung vorhanden sind.

So wird die vom aktiven Differential vorgenommene Drehmomentverteilung auf die Vorderräder vorzugsweise aus den Ansteuerungssignalen dieses Differentials ermittelt. In diesem Falle ist es nicht erforderlich, weitere Sensoren oder Messeinrichtungen zur Ermittlung der resultierenden Drehmomentverteilung vorzusehen, wodurch sich der Aufwand für die Implementierung des Verfahrens entsprechend verringert. Eine eventuelle geringe Diskrepanz zwischen der realen Drehmomentverteilung und den angesteuerten Sollwerten führt dabei zu keinen nennenswerten Nachteilen.

In ähnlicher Weise wird das Gesamtdrehmoment vorzugsweise aus den in einer Motorsteuereinheit bereitstehenden Daten (Zielvorgaben und/oder Meßwerten) ermittelt. Auch in diesem Falle kann auf eine aufwendige meßtechnische Erfassung des Gesamtdrehmomentes verzichtet werden.

Die Erfindung betrifft ferner ein Kraftfahrzeug, enthaltend
- eine Antriebsmaschine, die von einer Motorsteuereinheit kontrolliert wird;
- ein aktives Differential, welches die Antriebsmaschine mit den Vorderrädern verbindet und welches von einer Differential-Steuereinheit kontrolliert wird;
- eine Lenkunterstützungseinrichtung zur Erzeugung eines Lenkhilfsmomentes am Lenksystem der Vorderräder, welche von einer Lenkunterstützungs-Steuereinheit kontrolliert wird.

Die Lenkunterstützungs-Steuereinheit ist dabei mit der Motorsteuereinheit und der Differential-Steuereinheit gekoppelt und dahingehend ausgebildet, ein Verfahren der vorstehend erläuterten Art auszuführen. D.h., daß die Lenkunterstützungs-Steuereinheit die vom aktiven Differential ausgeübte Drehmomentverteilung auf die Vorderräder sowie das von der Brennkraftmaschine abgegebene Gesamtdrehmoment erfaßt und hieraus ein Kompensationsmoment ermittelt, welches anschließend über die Lenkunterstützungseinrichtung auf das Lenksystem ausgeübt wird. Von einer ungleichen Drehmomentverteilung an den Vorderrädern ausgehende Störeinflüsse auf die Lenkung können auf diese Weise kompensiert werden.

Die Erfindung wird nachfolgend anhand der Zeichnungen beispielhaft näher erläutert. Es zeigen:
- Fig. 1: schematisch die Kräfteverhältnisse an der Vorderachse in einem erfindungsgemäßen Kraftfahrzeug; und
- Fig. 2: ein Schema zur Bestimmung des Kompensationsmomentes für das Lenksystem.

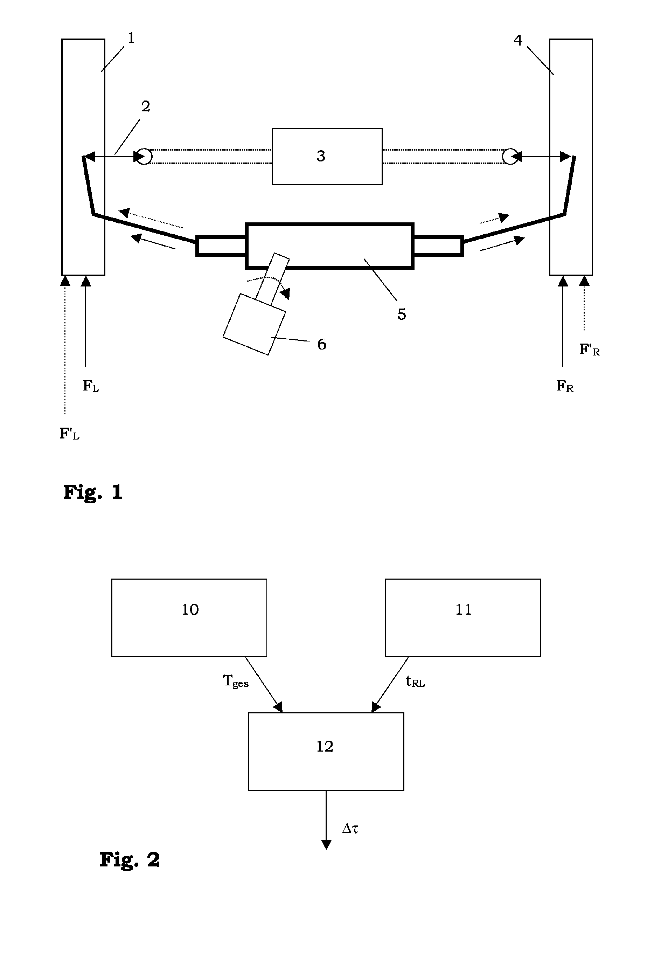

In Figur 1 ist in einer Aufsicht schematisch eine angetriebene Vorderachse eines Kraftfahrzeugs dargestellt. Die angetriebene Vorderachse umfaßt das linke Vorderrad 1 und das rechte Vorderrad 4, welche über ein aktives Frontdifferential 3 von einer Brennkraftmaschine (nicht dargestellt) angetrieben werden. Die Vorderräder 1 und 4 sind ferner über ein Lenksystem 5 steuerbar, wobei in der Figur die Geradeausstellung dargestellt ist. Auf das Lenksystem 5 wirkt ein Elektromotor 6 zur elektrisch angetriebenen Lenkunterstützung.

Bei einer normalen Geradeausfahrt beziehungsweise einem ungesperrten oder nicht aktivierten Differential wirken auf das rechte und linke Vorderrad 1, 4 jeweils gleich große Kräfte F_{L}, F_{R}. In diesem Falle wird kein störendes Drehmoment auf das Lenksystem 5 ausgeübt.

Wenn jedoch das Differential 3 gesperrt ist beziehungsweise zur Aufbringung einer ungleichen Drehmomentverteilung auf das rechte und linke Vorderrad 1, 4 aktiviert ist, kann sich zum Beispiel bei einer Kurvenfahrt oder bei Untergründen unterschiedlicher Reibung unter den beiden Vorderrädern 1, 4 ein Unterschied zwischen der Kraft F_{L}' auf das linke beziehungsweise F_{R}' auf das rechte Vorderrad 1, 4 ergeben. Diese unterschiedlich großen Kräfte führen dann über den Lenkhebel 2 zu einem entsprechenden Störmoment im Lenksystem 5.

Mit der vorliegenden Erfindung ist es möglich, derartige Lenkmomentstörungen in einfacher Weise ganz oder zumindest teilweise zu kompensieren. Gemäß dem Steuerungsschema aus Figur 2 wird zu diesem Zweck aus der Motorsteuereinheit 10 das Gesamtdrehmoment T_{ges} sowie aus der Steuereinheit 11 des aktiven Frontdifferentials 3 die Drehmomentverteilung t_{LR} zwischen rechtem und linkem Vorderrad 1, 4 ausgelesen und der Steuereinheit 12 für die Lenkunterstützungseinrichtung 6 zugeführt. Unter Verwendung der beiden genannten Größen T_{ges} und t_{LR} kann die Lenkunterstützungs-Steuereinheit 12 bei bekannter Größe des Lenkhebels 2 der Vorderradaufhängung ein Kompensationsmoment Δτ errechnen, welches die durch das aktive Differential 3 verursachte Lenkmomentstörung ganz oder teilweise kompensiert. Die Lenkunterstützungs-Steuereinheit 12 verwendet dann dieses berechnete Kompensationsmoment Δτ zur Ansteuerung der Lenkunterstützungseinrichtung 6, welche ein entsprechendes kompensierendes Lenkhilfsmoment ausübt. Auf diese Weise können die vom Fahrer wahrgenommenen Lenkmomentstörungen minimiert werden.

## Patentansprüche

1. Verfahren zur Kompensation von Lenkmomentstörungen in einem Kraftfahrzeug mit Frontantrieb oder Allradantrieb und einem aktiven Differential (3) im Antriebsstrang der Vorderräder (1, 4) sowie mit einer aktiven Lenkunterstützungseinrichtung (6), wobei
**dadurch gekennzeichnet, daß**
a) die vom aktiven Differential ausgeübte Drehmomentverteilung (t_{LR}) auf die Vorderräder ermittelt wird;
b) das Gesamtdrehmoment (T_{ges}) ermittelt wird, das an die Vorderräder (1,4) abgegeben wird;
c) aus der Drehmomentverteilung (t_{LR}) und dem Gesamtdrehmoment (T_{ges}) ein Kompensationsmoment (Δτ) ermittelt und von der Lenkunterstützungseinrichtung auf das Lenksystem (5) ausgeübt wird, welches Störkräfte aufgrund einer ungleichen Drehmomentverteilung ganz oder teilweise kompensiert.

2. Verfahren nach Anspruch 1,
**dadurch gekennzeichnet, daß**
die vom aktiven Differential (3) ausgeübte Drehmomentverteilung (t_{LR}) auf die Vorderräder (1, 4) aus der Ansteuerung des Differentials ermittelt wird.

3. Verfahren nach Anspruch 1 oder 2,
**dadurch gekennzeichnet, daß**
das Gesamtdrehmoment (T_{ges}) aus den Daten einer Motorsteuereinheit (10) ermittelt wird.

4. Kraftfahrzeug mit Frontantrieb oder Allradantrieb, enthaltend
a) eine Brennkraftmaschine, die von einer Motorsteuereinheit (10) kontrolliert wird;
b) ein aktives Differential (3), welches die Brennkraftmaschine mit den Vorderrädern (1, 4) verbindet und welches von einer Differential-Steuereinheit (11) kontrolliert wird;
c) eine Lenkunterstützungseinheit (6) zur Erzeugung eines Lenkhilfsmomentes am Lenksystem (5) der Vorderräder (1, 4), welche von einer Lenkunterstützungs-Steuereinheit (12) kontrolliert wird, wobei die Lenkunterstützungs-Steuereinheit mit der Motorsteuereinheit und der Differential-Steuereinheit gekoppelt und dahingehend ausgebildet ist, ein Verfahren nach einem der Ansprüche 1 bis 3 auszuführen.
